Europäisches Patentamt

European Patent Office

Office européen des brevets

(19)

(11) **EP 0 562 924 B1**

(12) **FASCICULE DE BREVET EUROPEEN**

(45) Date de publication et mention
de la délivrance du brevet:
**29.01.1997 Bulletin 1997/05**

(51) Int Cl.6: **G01P 3/36**, G01P 3/80,
G01S 17/58

(21) Numéro de dépôt: **93400707.1**

(22) Date de dépôt: **19.03.1993**

(54) **Dispositif de mesure de la vitesse de déplacement d'un objet**

Vorrichtung zur Messung der Geschwindigkeit eines bewegten Objektes

Device for measuring the speed of a moving object

(84) Etats contractants désignés:
**DE FR GB IT**

(30) Priorité: **23.03.1992 FR 9203452**

(43) Date de publication de la demande:
**29.09.1993 Bulletin 1993/39**

(73) Titulaire: **COMMISSARIAT A L'ENERGIE
ATOMIQUE
75015 Paris (FR)**

(72) Inventeurs:
• **Fulbert, Laurent
F-38500 Coublevie (FR)**
• **Mehaule, Jean-Claude
F-38320 Poisat (FR)**

(74) Mandataire: **Signore, Robert et al
c/o BREVATOME
25, rue de Ponthieu
75008 Paris (FR)**

(56) Documents cités:
**EP-A- 0 097 250**      **EP-A- 0 332 293**
**DE-A- 2 164 086**      **DE-C- 3 211 620**

• **ELECTRONICS AND COMMUNICATIONS IN
JAPAN vol. 67, no. 1, Janvier 1984, NEW YORK
US pages 59 - 67 HAYASHI ET AL '2-D
Image-Velocity Sensor with a Pair of Optical
Fiber arrays'**

**Description**

La présente invention a pour objet un dispositif pour mesurer la vitesse de déplacement d'un objet par rapport à un repère situé dans un plan de référence et en mouvement par rapport à ce plan. Elle trouve de nombreuses applications dans tous les domaines nécessitant une mesure de vitesse sans contact.

Une mesure de vitesse de déplacement d'un objet par rapport à un repère situé dans un plan de référence (dont la distance par rapport à ce plan peut varier) peut se décomposer en deux mesures, à savoir la mesure de la vitesse longitudinale et la mesure de la vitesse transversale. On rappelle que les valeurs de la vitesse longitudinale et de la vitesse transversale sont déduites de la valeur du module de la vitesse projeté sur le plan de référence et de la valeur de l'angle de la projection de la vitesse dans ce plan avec un des deux axes de référence contenus dans ce plan.

De nombreux documents décrivent des dispositifs pour mesurer la vitesse d'un objet, sans contact avec ledit objet.

De façon plus précise, plusieurs applications connues permettent de mesurer la vitesse longitudinale d'un objet. Une de ces applications est décrite dans le document intitulé "Speed measurement by cross-correlation - Theoretical aspects and applications in the paper industry", rédigé par P. BOLON et J.L. LACOUME et publié dans IEEE Translations on acoustics, speech, and signal processing, vol. ASSP 31, n° 6, decembre 1983.

Une autre application de mesure de la vitesse longitudinale par intercorrélation est décrite dans "A signal processor for a noncontact speed measurement system" par J. BOHMANN, H. MEYR, R. PETERS et G. SPIES, publié dans IEEE Translations on vehicular technology, vol. VT 33, n° 1, février 1984.

Un tel procédé de mesure par intercorrélation a été édité sous la plume de J. SABATER sous le titre "Vélocimétrie laser par corrélation", dans J. Optics, 1980, vol. 11, n° 4, pages 225 à 229.

Dans cette dernière application, on utilise deux sources laser. Ces sources projettent des points lumineux sur l'objet en mouvement. Deux optiques, généralement des lentilles sphériques, associées chacune à l'une des sources, permettent de collecter les rayons lumineux rétrodiffusés par l'objet, sur deux détecteurs de lumière du type cellules photosensibles et, plus précisément, des photodiodes.

Ces détecteurs sont aptes à transformer l'énergie lumineuse des rayons reçus en courants électriques $x(t)$ et $y(t)$. Dans cette application, les deux optiques sont identiques : le courant $y(t)$ reçu par l'un des détecteurs est donc identique au courant $x(t-to)$ où to est le temps de décalage entre les moments de réception des signaux par l'un puis l'autre des détecteurs. Cette valeur to permet de déterminer la valeur de la vitesse longitudinale, to étant égal à la distance entre les deux points lumineux divisée par le module de la vitesse de l'objet, soit la vitesse longitudinale dudit objet.

La détermination de cette valeur to est réalisée à partir de la fonction d'intercorrélation dont l'expression est la suivante :

$$\text{Cxy(t')} = 1/T\int_{O}^{To} x(t)y(t-t')dt,$$

où T est le temps d'intégration. Cette fonction Cxy(t') possède un pic centré en t'=to. La détermination de l'abscisse du sommet du pic, c'est-à-dire la détermination de to, permet donc de déterminer la vitesse longitudinale recherchée.

Les documents précédemment cités ont pour principal inconvénient de ne permettre que la mesure de la vitesse longitudinale de l'objet en mouvement et pas la mesure de l'angle de déplacement de l'objet par rapport à l'axe de référence.

On connaît, cependant, un procédé pour mesurer la vitesse transversale d'un objet en mouvement, c'est-à-dire pour mesurer l'angle du vecteur vitesse dudit objet avec un axe de référence. Un tel procédé est décrit dans le document "Absolute 2-D velocity measurements for cars", de E. HERRE et R. MASSEN, dans Prometheus WG1 True Speed expert panel, Stuttgart, 21 février 1991. Ce procédé a été mis en application pour des micro-ondes. Il utilise donc des émetteurs micro-ondes comme source de génération desdites micro-ondes. Il utilise en outre, un premier détecteur, ainsi qu'une série de détecteurs placée à une certaine distance du premier détecteur et de façon symétrique par rapport à l'axe de référence. Le point de passage de la trajectoire de déplacement dudit objet est donné par le détecteur de la série de détecteurs présentant le plus fort coefficient de corrélation avec le premier détecteur.

Ce procédé a pour principal inconvénient que les émetteurs et détecteurs micro-ondes sont encombrants et d'un coût relativement élevé. De plus, les faisceaux micro-ondes étant divergents, il est difficile de focaliser lesdits faisceaux sur une zone de petite dimension, ce qui nécessite une certaine distance entre chacun des détecteurs de la série. Or, la précision de la mesure d'angle est dépendante de la distance entre chaque détecteur de la série. La précision d'un système utilisant un tel procédé est donc relativement limitée.

La présente invention a donc pour avantage de résoudre les inconvénients des systèmes décrits précédemment. Elle consiste en un dispositif de mesure de la vitesse de déplacement d'un objet par rapport à un plan de référence et dont la distance par rapport à ce plan varie, comportant :

- une première et une seconde sources lumineuses projetant respectivement un premier et un second faisceaux lumineux sur l'objet ;
- des premiers et seconds moyens détecteurs de lumière associés respectivement à la première et à la seconde sources lumineuses ;
- des moyens de traitement, reliés aux premiers et seconds moyens détecteurs, pour l'évaluation de composantes longitudinale et transversale de la vitesse de l'objet ; et
- des premiers et seconds moyens optiques pour focaliser les premiers et seconds rayons lumineux rétrodiffusés par l'objet sur les premiers et seconds moyens détecteurs respectifs,

Elle se caractérise par le fait que

- la première source lumineuse projette un point lumineux sur l'objet et la seconde source lumineuse projette une ligne lumineuse sur ledit objet ;
- les seconds moyens optiques sont aptes à filtrer les rayons lumineux en fonction de leur angle d'incidence ;
- les premiers moyens détecteurs comportent un détecteur et les seconds moyens détecteurs comportent une barrette de détecteurs dont chacun desdits détecteurs est apte à détecter un segment de la ligne lumineuse rétrodiffusée, cette ligne étant focalisée et filtrée par les seconds moyens optiques ; et
- les moyens de traitement sont aptes à déterminer

  . des fonctions d'intercorrélation temporelles entre le détecteur des premiers moyens détecteurs et chacun des détecteurs des seconds moyens détecteurs ;
  . des coefficients d'intercorrélation de ces fonctions d'intercorrélation ;
  . une valeur de position, dans la barrette de détecteurs, du détecteur associé au coefficient d'intercorrélation de valeur maximale ;

- une valeur d'abscisse du maximum de la fonction d'intercorrélation correspondant au coefficient de valeur maximale ;
- la composante transversale de la vitesse de l'objet à partir de la valeur de position du détecteur de la barrette et de la valeur de distance entre le point lumineux et la ligne lumineuse sur l'objet ; et
- la composante longitudinale de la vitesse de l'objet à partir de la valeur d'abscisse déterminée et de la valeur de distance entre le point lumineux et la ligne lumineuse sur l'objet.

Selon un premier mode de réalisation de l'invention, les seconds moyens optiques comportent une lentille cylindrique (14), parallèle au plan de référence, pour focaliser la ligne lumineuse rétrodiffusée par l'objet et reçue selon une direction sensiblement perpendiculaire audit plan.

Selon ce premier mode de réalisation, les seconds moyens optiques peuvent comporter, entre la lentille cylindrique et la barrette de détecteurs, des moyens d'écran pour absorber les rayons lumineux issus de la ligne lumineuse ayant un angle d'incidence supérieur à un angle d'incidence de référence.

Selon un second mode de réalisation de l'invention, les seconds moyens optiques comportent une pluralité de lentilles sphériques en portions ou entières, chacune de ces lentilles sphériques étant associée à un détecteur de la barrette de détecteurs et disposée parallèlement au plan de référence pour focaliser un segment de ligne lumineuse rétrodiffusée par l'objet.

Ces lentilles sphériques (en portions ou entières) peuvent être de type holographique.

Selon un second mode de réalisation de l'invention, les seconds moyens optiques peuvent comporter, entre la pluralité de lentilles sphériques et la barrette de détecteurs, des moyens d'écran pour absorber les rayons lumineux issus de la ligne lumineuse ayant un angle d'incidence supérieur à un angle d'incidence de référence.

Ces moyens d'écran peuvent comporter une pluralité de lames transparentes à la lumière, parallèles les unes aux autres et disposées perpendiculairement au plan.

Selon une première réalisation, ces lames transparentes sont des lames de verre. Elles comportent, sur au moins une de leurs faces, une couche d'un matériau opaque apte à faire écran à la lumière.

Selon une seconde réalisation, les lames transparentes sont des lames d'air réalisées à partir de feuilles opaques faisant écran à la lumière, disposées perpendiculairement au plan et séparées par de l'air.

Selon une caractéristique de l'invention, les moyens d'écran peuvent comporter un élément optique holographique apte à filtrer les rayons lumineux issus de la ligne lumineuse et reçus selon une bande passante angulaire réduite par rapport au plan perpendiculaire au plan de référence.

De façon avantageuse, les sources lumineuses sont des sources laser.

D'autres caractéristiques et avantages de l'invention apparaîtront au cours de la description qui va suivre donnée, à titre illustratif, mais nullement limitatif, en référence aux dessins dans lesquels :

- la figure 1 représente de façon schématique l'ensemble du dispositif avec les deux sources laser, l'objet, les moyens détecteurs et les moyens optiques ; et
- la figure 2 représente schématiquement le réseau d'écrans dans lequel circulent les rayons lumineux rétrodiffusés jusqu'à ce qu'ils soient détectés par la barrette de détecteurs.

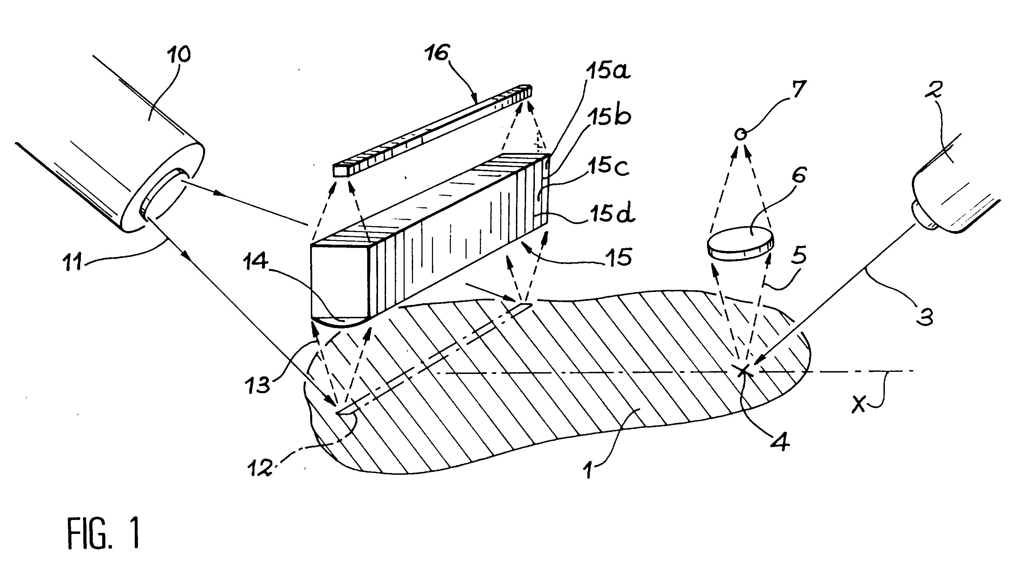

Sur la figure 1, on a représenté un schéma d'ensemble du dispositif. On voit donc sur cette figure, l'objet 1 avec l'axe de référence x. La source lumineuse 2 envoie ponctuellement un faisceau lumineux 3 sur l'objet 1 et forme une tache lumineuse 4 sur ledit objet.

Cette source lumineuse 2 étant, selon un mode de réalisation préféré de l'invention, une source laser, la tache lumineuse 4 sera donc, dans la suite de la description, appelée "tache laser 4".

Le faisceau lumineux 3 (appelé aussi "faisceau laser 3") est retrodiffusé par l'objet 1 en un ensemble de rayons 5 dont la lentille sphérique 6 collecte une partie pour la focaliser sur le premier moyen détecteur 7.

Selon un mode de réalisation de l'invention, ce premier moyen détecteur est une photodiode, appelée "photodiode de référence".

Une seconde source lumineuse 10 envoie un faisceau lumineux 11 sur l'objet 1. Tout comme la première source lumineuse 2, cette seconde source 10 est, selon un mode de réalisation préféré, une source laser.

Selon l'invention, cette source laser 10 projette une ligne laser (ou plan laser) sur ledit objet 1. Cette ligne laser, référencée 12, est rétrodiffusée par ledit objet 1 en un ensemble de rayons 13. La lentille 14 assure la focalisation de ces rayons rétrodiffusés 13 vers les seconds moyens détecteurs, c'est-à-dire vers une barrette de détecteurs 16. Cette barrette de détecteurs 16 est, de façon plus précise, une barrette de photodiodes. Chacune des photodiodes de la barrette 16 reçoit un segment de la ligne laser 12 focalisé par la lentille 14.

Les faisceaux lumineux 3 et 11, émis respectivement par les sources 2 et 10, sont perpendiculaires au plan , respectivement, des premiers et seconds moyens optiques.

Selon le mode de réalisation de l'invention représenté sur la figure 1, cette lentille 14 est une lentille cylindrique. Elle a pour avantage de se comporter comme une lentille sphérique dans la direction perpendiculaire à la barrette de détecteurs 16, c'est-à-dire également dans la direction perpendiculaire à la ligne laser 12. Cette lentille cylindrique 14 se comporte comme une lame à faces parallèles dans la direction parallèle à la barrette de détecteurs 16. Ainsi, l'effet de défocalisation, dû à la variation de distance entre les seconds moyens optiques et la ligne lumineuse sur l'objet, induit une tache dont la dimension varie uniquement dans la direction perpendiculaire à la barrette, ce qui interdit les débordements sur les détecteurs voisins du détecteur devant recevoir le segment de faisceau focalisé.

Selon un autre mode de réalisation de l'invention, cette lentille 14 comporte une pluralité de portions de lentilles sphériques ou une pluralité de lentilles sphériques entières. Chacune de ces lentilles sphériques (en portions ou entières) est associée à l'un des détecteurs de la barrette de détecteurs 16.

Selon une particularité de ce mode de réalisation, les lentilles sphériques peuvent être de type holographique. Différentes sortes d'optiques holographiques, dont les lentilles, sont décrites dans l'article intitulé "Les optiques holographiques" publié dans la revue Opto, n° 67 de mai-juin 1992.

Comme montré sur la figure 1, un réseau d'écrans 15 est placé en amont de la barrette afin de filtrer les faisceaux laser (ou rayons) ayant un angle d'incidence trop élevé. En effet, il est nécessaire de minimiser les rayons rétrodiffusés issus de la ligne laser 12 de se projeter simultanément sur plusieurs détecteurs de la barrette 16.

Sur cette figure 1, le réseau d'écrans 15 est placé au-dessus de la lentille cylindrique 14 et forme, avec elle, un bloc compact.

Dans un autre mode de réalisation de l'invention, le réseau d'écrans 15 est placé au-dessous de la lentille cylindrique.

Selon le mode de réalisation de l'invention montré sur la figure 1, ce réseau d'écrans 15 comporte, comme son nom l'indique, une succession d'écrans 15a, 15c, etc., aptes à absorber certains rayons de la ligne laser 12 et, particulièrement, les rayons ayant un angle d'incidence supérieur à une valeur donnée, c'est-à-dire les rayons dont la direction fait un angle trop grand avec le plan perpendiculaire à la barrette de détecteurs. De ce fait, seuls les rayons ayant une incidence voisine de la normale pourront pénétrer dans le système optique. La portion de ligne lumineuse détectée par chacun des détecteurs est centrée autour de la même position et a une dimension plus ou moins importante suivant la distance du dispositif par rapport à l'objet.

Selon un mode de réalisation de ce réseau d'écrans 15, ledit réseau comporte un ensemble de lames de verre 15a, 15c, etc., de faible épaisseur. L'interface entre ces lames 15b, 15d, etc. est rendue opaque par l'intermédiaire d'un dépôt sur les faces des lames 15a, 15c, etc. Ce dépôt peut être soit une couche opaque, soit une colle opaque permettant de rigidifier l'ensemble constitué des lames 15a, 15c, etc. Ainsi, la lumière se propage à l'intérieur des lames de verre 15a, 15c, etc., et les interfaces 15b, 15d, etc., entre lesdites lames jouent le rôle d'écran.

Ces lames de verre peuvent également être des lames de plexiglas, des lames de résine, ou toutes autres lames transparentes à la lumière.

Selon un autre mode de réalisation de ce réseau d'écran 15, les lames transparentes sont des lames d'air séparées par des feuilles opaques, telles que des feuilles métalliques (par exemple en aluminium traité).

Ces feuilles opaques sont distantes d'une certaine épaisseur afin de créer, entre elles, lesdites lames d'air.

Ce réseau d'écran 15 est collé, par l'une de ses extrémités, à la lentille cylindrique 14 de façon à former un ensemble compact et robuste.

Dans un tel réseau d'écrans 15, réalisé selon l'un quelconque des deux modes de réalisation précédents, la lumière se propage à l'intérieur des lames transparentes 15a, 15c, 15e, etc., dans le sens longitudinal desdites lames. Les faces d'entrée et de sortie de la lumière dans les lames sont de préférence polies et traitées optiquement pour permettre la propagation de ladite lumière. Aussi, cette lumière ne traverse pas les interfaces 15b, 15d, etc., entre deux lames, grâce au dépôt opaque réalisé entre ces deux lames, ce dépôt opaque absorbant les rayons lumineux reçus.

De plus, afin d'éviter un guidage de la lumière à l'intérieur de la lame, la réflexion doit être nulle à l'interface. Pour cela, un mode de réalisation consiste à dépolir les faces des lames de verre avant dépôt de la couche opaque, ce qui élimine la réflexion des rayons.

Selon encore un autre mode de réalisation des moyens optiques, le réseau d'écrans 15 comportent un élément optique holographique ayant les propriétés décrites dans l'article cité précédemment. Un tel élément peut être réalisé de façon à ce qu'il ait une bande passante angulaire réduite par rapport au plan perpendiculaire à la direction de la barrette de façon à absorber les rayons lumineux dont l'incidence angulaire n'entre pas dans la bande passante

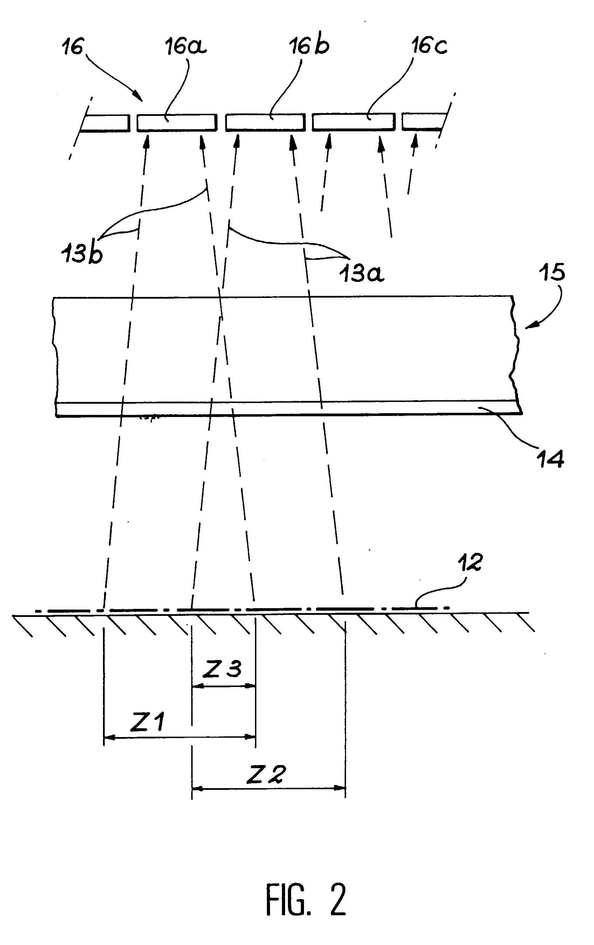

Sur la figure 2, on a représenté schématiquement les zones d'observation des détecteurs. Cette figure 2 est représentée selon le même mode de réalisation que celui montré sur la figure 1. On voit donc, sur cette figure, la ligne lumineuse du laser 12 qui est rétrodiffusée par l'objet 1 en des rayons lumineux 13a, 13b, etc. On voit donc une première zone d'observation Z1, une seconde zone d'observation Z2 et une zone de recouvrement Z3, c'est-à-dire une zone commune à la zone d'observation Z1 et à la zone Z2. Le réseau d'écrans 15 permet de limiter, notamment, cette zone de recouvrement Z3.

Aussi, chaque écran doit posséder un coefficient de transmission et un coefficient de réflexion des rayons lumineux les plus faibles possible. La distance entre les différents écrans du réseau d'écrans 15 et la hauteur desdits écrans définissent l'angle d'incidence maximum des rayons lumineux pouvant traverser le réseau. Ainsi, chaque rayon lumineux ayant un angle d'incidence supérieur à l'angle déterminé par les paramètres de réalisation du réseau d'écrans 15 est absorbé par ledit réseau. Chaque détecteur 16a, 16b, 16c, etc., captant les rayons lumineux issus de la ligne laser 12 avec un certain angle d'ouverture, il peut exister au niveau de la ligne laser 12 une zone de recouvrement Z3 commune à au moins deux des détecteurs. La taille de cette zone de recouvrement Z3 dépend de l'angle d'ouverture du réseau d'écrans 15 et de l'espace entre chacun des détecteurs de la barrette 16. Aussi, pour diminuer, voire éliminer, cette zone de recouvrement Z3, on agit sur les différents paramètres de ce réseau d'écrans 15, à savoir l'angle d'ouverture du réseau d'écran et l'espace entre les différents détecteurs.

En outre, comme la lentille cylindrique 14 se comporte, dans la direction parallèle à la barrette de détecteurs 16, comme une lame à faces parallèles, la taille de l'image reste constante quelle que soit la distance entre l'objet 1 et l'ensemble constitué du réseau d'écran, de la lentille cylindrique 14 et de la barrette de détecteurs 16.

Pour une barrette de détecteurs 16 de longueur L, le réseau d'écrans 15 est de longueur L x l (L multiplié par l) pour une hauteur h et la lentille est de longueur L x l.

Selon un mode de réalisation de l'invention, L a pour valeur 25 mm, 1 a pour valeur 25 mm et h vaut 60 mm.

La hauteur h est déterminée par l'angle d'ouverture A de l'écran, à savoir h = e/A, où e est l'épaisseur d'une lame transparente de l'écran.

De façon avantageuse, l'épaisseur e est choisie relativement petite de façon à ce que le réseau d'écrans 15 soit le moins encombrant possible.

Le dispositif selon l'invention comporte également des moyens de traitement qui n'ont pas été représentés sur les figures par mesure de simplification des figures. Ces moyens de traitement permettent d'évaluer la valeur de la vitesse longitudinale du déplacement de l'objet et la valeur de la vitesse latérale de déplacement dudit objet. Ils peuvent être réalisés par un circuit intégré ou par un microprocesseur.

La vitesse longitudinale est calculée par corrélation temporelle entre le premier et le second moyens détecteurs d'une façon sensiblement similaire à celle décrite dans les documents de l'art antérieur.

On rappelle que le signal électrique issu de chacun des détecteurs est amplifié, filtré puis échantillonné. On calcule ensuite la fonction d'intercorrélation, donnée précédemment, entre les signaux issus de chacun des détecteurs de la barrette et le signal issus du premier détecteur.

La vitesse latérale de l'objet est alors calculée en déterminant quel est le détecteur de la barrette 16 dont le signal est le mieux corrélé avec le premier détecteur. On définit ainsi le coefficent de corrélation entre deux signaux x(t) et y(t) par l'expression suivante :

$$\rho_{xy} = C_{xy}(t') . (\Sigma \, x(t)^2 . \, \Sigma y(t-t')^2)^{-1/2},$$

où Cxy(t') représente la valeur du pic de la fonction de corrélation. Dans le cas où l'acquisition des signaux se fait exactement sur la même trajectoire, on a x(t)=y(t-t') et Cxy(t')= Σx2= Σy2, donc ρxy=1. La valeur de la fonction ρ décroît lorsque les trajectoires ne sont plus les mêmes.

Pour déterminer quel est le détecteur de la barrette qui est le plus proche de la trajectoire suivie par l'objet, on recherche le maximum du coefficient de corrélation ρ sur l'ensemble des détecteurs de la barrette.

Ainsi, lorsque l'on connaît le point de passage de la trajectoire au niveau de la barrette de détecteurs, on connaît l'angle du vecteur vitesse par rapport à l'axe de référence.

La vitesse longitudinale est donc finalement déterminée à partir de la valeur t' maximum correspondant au détecteur ayant le plus fort coefficient de corrélation.

On peut citer, à titre d'exemple, un cas dans lequel les composantes transversale $V_T$ et longitudinale $V_L$ sont déterminées dans un repère dont l'axe des abscisses est parallèle à la ligne lumineuse, l'axe des ordonnées est perpendiculaire à la ligne lumineuse, ces deux axes étant dans le plan de référence, et l'origine est confondue avec la projection du point lumineux sur le plan de référence. Ces composantes longitudinale $V_L$ et transversale $V_T$ s'expriment sous les formes suivantes :

$$V_L = \frac{D}{\tau} \text{ et } V_T = \frac{d}{\tau}$$

où D est la distance entre le point lumineux et la ligne lumineuse, $\tau$ est l'abscisse du maximum de la fonction d'intercorrélation et d est l'abscisse du détecteur (dans ce repère) associé au coefficient d'intercorrélation de valeur maximale.

Ce dispositif selon l'invention utilise donc des ondes optiques, ainsi qu'une première source laser ponctuelle et une seconde source laser projetant un plan laser sur l'objet dont on cherche à déterminer la valeur.

La réception du rayon lumineux rétrodiffusé se fait sur une barrette de détecteurs dont les détecteurs sont, de préférence, des photodiodes. La taille de chaque photodiode détermine la résolution dudit système et donc la taille des segments de la ligne laser reçus par les photodiodes.

En outre, ces photodiodes présentent l'avantage d'être compactes, robustes et bon marché. L'ensemble du dispositif selon l'invention est donc robuste et d'un coût tout à fait intéressant.

**Revendications**

1. Dispositif de mesure de la vitesse de déplacement d'un objet par rapport à un repère situé dans un plan de référence, ledit objet étant en mouvement par rapport à ce plan, comportant :

   - une première et une seconde sources lumineuses (2, 10) projetant respectivement un premier et un second faisceaux lumineux (3, 11) sur l'objet (1) ;
   - des premiers et seconds moyens détecteurs de lumière (7, 16) associés respectivement à la première et à la seconde sources lumineuses ;
   - des moyens de traitement, reliés aux premiers et seconds moyens détecteurs, pour l'évaluation de composantes longitudinale et transversale de la vitesse de l'objet; et
   - des premiers et seconds moyens optiques (6, 14, 15) pour focaliser les premiers et seconds rayons lumineux rétrodiffusés par l'objet sur les premiers et seconds moyens détecteurs respectifs,

   caractérisé en ce que :

   - la première source lumineuse projette un point lumineux (4)sur l'objet et la seconde source lumineuse projette une ligne lumineuse (12) sur ledit objet ;
   - les seconds moyens optiques sont aptes à filtrer les rayons lumineux en fonction de leur angle d'incidence ;
   - les premiers moyens détecteurs comportent un détecteur et les seconds moyens détecteurs comportent une barrette de détecteurs dont chacun desdits détecteurs est apte à détecter un segment de la ligne lumineuse rétrodiffusée, cette ligne étant focalisée et filtrée par les seconds moyens optiques ; et
   - les moyens de traitement sont aptes à déterminer

     . des fonctions d'intercorrélation temporelles entre le détecteur des premiers moyens détecteurs et chacun des détecteurs des seconds moyens détecteurs ;
     . des coefficients d'intercorrélation de ces fonctions d'intercorrélation ;
     . une valeur de position, dans la barrette de détecteurs, du détecteur associé au coefficient d'intercorrélation de valeur maximale ;

. une valeur d'abscisse du maximum de la fonction d'intercorrélation correspondant au coefficient de valeur maximale ;

. la composante transversale de la vitesse de l'objet à partir de la valeur de position du détecteur de la barrette et de la valeur de distance entre le point lumineux et la ligne lumineuse sur l'objet ; et

- la composante longitudinale de la vitesse de l'objet à partir de la valeur d'abscisse déterminée et de la valeur de distance entre le point lumineux et la ligne lumineuse sur l'objet.

**2.** Dispositif selon la revendication 1, caractérisé en ce que les seconds moyens optiques comportent une lentille cylindrique (14), parallèle au plan de référence, pour focaliser la ligne lumineuse rétrodiffusée par l'objet et reçue selon une direction sensiblement perpendiculaire audit plan.

**3.** Dispositif selon la revendication 2, caractérisé en ce que les seconds moyens optiques comportent, entre la lentille cylindrique et la barrette de détecteurs, des moyens d'écran (15) pour absorber les rayons lumineuse issus de la ligne lumineuse ayant un angle d'incidence supérieur à un angle d'incidence de référence.

**4.** Dispositif selon la revendication 1, caractérisé en ce que les seconds moyens optiques comportent une pluralité de lentilles sphériques en portions ou entières, chacune de ces lentilles sphériques étant associée à un détecteur de la barrette de détecteurs et disposée parallèlement au plan de référence pour focaliser un segment de ligne lumineuse rétrodiffusée par l'objet.

**5.** Dispositif selon la revendication 4, caractérisé en ce que les lentilles sphériques, en portions ou entières, sont holographiques.

**6.** Dispositif selon la revendication 4 ou 5, caractérisé en ce que les seconds moyens optiques comportent, entre la pluralité de lentilles sphériques et la barrette de détecteurs, des moyens d'écran pour absorber les rayons lumineux issus de la ligne lumineuse ayant un angle d'incidence supérieur à un angle d'incidence de référence.

**7.** Dispositif selon l'une quelconque des revendications 3 à 6, caractérisé en ce que les moyens d'écran comportent une pluralité de lames transparentes (15a, 15c) à la lumière, parallèles les unes aux autres et disposées perpendiculairement au plan.

**8.** Dispositif selon la revendication 7, caractérisé en ce que les lames transparentes sont des lames de verre.

**9.** Dispositif selon la revendication 8, caractérisé en ce que les lames de verre comportent, sur au moins une de ses faces, une couche d'un matériau opaque (15b, 15d) apte à faire écran à la lumière.

**10.** Dispositif selon la revendication 7, caractérisé en ce que les lames transparentes sont des lames d'air réalisées à partir de feuilles opaques faisant écran à la lumière, disposées perpendiculairement au plan et séparées par de l'air.

**11.** Dispositif selon l'une quelconque des revendications 3 à 6, caractérisé en ce que les moyens d'écran comportent un élément optique holographique apte à filtrer les rayons lumineux issus de la ligne lumineuse et reçus selon une bande passante angulaire réduite par rapport au plan perpendiculaire au plan de référence.

**12.** Dispositif selon l'une quelconque des revendications 1 à 11, caractérisé en ce que les sources lumineuses sont des sources laser.

**Patentansprüche**

**1.** Vorrichtung zur Messung der Geschwindigkeit eines bewegten Objektes im Verhältnis zu einem in einer Bezugsebene angeordneten Bezugssystem, wobei besagtes Objekt sich bezüglich dieser Ebene bewegt, umfassend:

- eine erste und eine zweite Lichtquelle (2, 10), jeweils ein erstes und ein zweites Lichtbündel (3, 11) auf das Objekt (1) werfend;
- erste und zweite Lichtdetektionseinrichtungen (7, 16), jeweils verbunden mit der ersten und der zweiten Lichtquelle;

7

- Verarbeitungseinrichtungen, verbunden mit den ersten und zweiten Detektionseinrichtungen, zur Bewertung der Längs- und Querkomponenten der Geschwindigkeit des Objekts; und
- erste und zweite optische Einrichtungen (6, 14, 15), um die ersten und zweiten durch das Objekt rückgestreuten Lichtstrahlen jeweils auf die ersten und zweiten Detektionseinrichtungen zu fokussieren,

**dadurch gekennzeichnet:**

- daß die erste Lichtquelle einen Lichtpunkt (4) auf das Objekt wirft und die zweite Lichtquelle eine Lichtlinie (12) auf das Objekt wirft;
- daß die zweiten optischen Einrichtungen fähig sind, die Lichtstrahlen in Abhängigkeit von ihrem Einfallwinkel zu filtern;
- daß die ersten Detektionseinrichtungen einen Detektor umfassen und die zweiten Detektionseinrichtungen eine Detektorenanordnung umfassen, von der jeder Detektor fähig ist, ein Segment der rückgestreuten Linie zu detektieren, wobei diese Linie durch die zweiten optischen Einrichtungen fokussiert und gefiltert wird; und
- daß die Verarbeitungseinrichtungen fähig sind zum Determinieren:

  . von temporären Interkorrelationsfunktionen zwischen dem Detektor der ersten Detektionseinrichtungen und jedem Detektor der zweiten Detektionseinrichtungen;
  . von Interkorrelationskoeffizienten dieser Interkorrelationsfunktionen;
  . eines Positionwerts desjenigen Detektors in der Detektorenanordnung, dem der Interkorrelationskoeffizient mit dem höchsten Wert zugeordnet ist;
  . eines Abszissenwerts des Höchstwerts der dem maximalen Interkorrelationkoeffizienten entsprechenden Interkorrelationsfunktion;
  . der Querkomponenten der Geschwindigkeit des Objekts aufgrund des Positionswerts des Detektors der Anordnung und des Werts der Distanz zwischen dem Lichtpunkt und der Lichtlinie auf dem Gegenstand; und
  . der Längskomponenten der Geschwindigkeit des Objekts aufgrund des festgelegten Abzissenwerts und des Werts der Distanz zwischen dem Lichtpunkt und der Lichtlinie auf dem Objekt.

2. Vorrichtung nach Anspruch 1, dadurch gekennzeichnet, daß die zweiten optischen Einrichtungen eine zylindrische Linse (14) umfassen, parallel zu der Bezugsebene, um die durch das Objekt rückgestreute und entsprechend einer zu besagter Ebene im wesentlichen senkrechten Richtung empfangene Lichtlinie zu fokussieren.

3. Vorrichtung nach Anspruch 2, dadurch gekennzeichnet, daß die zweiten optischen Einrichtungen zwischen der zylindrischen Linse und der Detektorenanordnung Abschirm- bzw. Blendeneinrichtungen (15) umfassen, um die von der Lichtlinie hervorgegangenen Lichtstrahlen, die einen größeren Einfallwinkel haben als ein Bezugseinfallwinkel, zu absorbieren.

4. Vorrichtung nach Anspruch 1, dadurch gekennzeichnet, daß die zweiten optischen Einrichtungen eine Vielzahl sphärischer Linsen aufweisen, teilstückförmig oder ganz, wobei jede von diesen spärischen Linsen einem Detektor der Detektorenanordnung zugeordnet ist und parallel zu der Bezugsebene angeordnet ist, um ein Segment der durch das Objekt rückgestreuten Lichtlinie zu fokussieren.

5. Vorrichtung nach Anspruch 4, dadurch gekennzeichnet, daß die spärischen Linsen, teilstückförmig oder ganz, holographisch sind.

6. Vorrichtung nach Anspruch 4 oder 5, dadurch gekennzeichnet, daß die zweiten optischen Einrichtungen zwischen der Vielzahl sphärischer Linsen und der Detektorenanordnung Abschirmeinrichtungen umfassen, um die von der Lichtlinie stammenden Lichtstrahlen zu absorbieren, die einen Einfallwinkel haben, der größer ist als ein Bezugseinfallwinkel.

7. Vorrichtung nach einem der Ansprüche 3 bis 6, dadurch gekennzeichnet, daß die Abschirmeinrichtungen eine Vielzahl lichtdurchlässiger Lamellen (15a, 15c) umfassen, parallel zueinander und senkrecht zu Ebene angeordnet.

8. Vorrichtung nach Anspruch 7, daß die durchlässigen Lamellen Glaslamellen sind.

9. Vorrichtung nach Anspruch 8, dadurch gekennzeichnet, daß die Glaslamellen auf wenigstens einer ihrer Flächen bzw. Seiten eine Schicht aus einem opaken Material (15b, 15d) aufweisen, fähig das Licht abzuschirmen.

10. Vorrichtung nach Anspruch 7, dadurch gekennzeichnet, daß die durchlässigen Lamellen Luftlamellen sind, realisiert mittels opaker Folien, die eine Lichtabschirmung bilden, senkrecht zur Ebene angeordnet und getrennt durch Luft.

11. Vorrichtung nach einem der Ansprüche 3 bis 6, dadurch gekennzeichnet, daß die Abschirmeinrichtungen ein holographisches optisches Element umfassen, fähig die Lichtstrahlen zu filtern, die aus der Lichtlinie hervorgegangenen sind und entsprechend einem bezüglich der zur Bezugsebene senkrechten Ebene reduzierten winkeligen Durchlaßbereich bzw. -band empfangen werden.

12. Vorrichtung nach einem der Ansprüche 1 bis 11, dadurch gekennzeichnet, daß die Lichtquellen Laserquellen sind.

**Claims**

1. Device for measuring the velocity of displacement of an object relative to a frame lying in a reference plane, the said object being in motion relative to this plane, including:

   - a first and second light source (2, 10) respectively projecting a first and second light beam (3, 11) onto the object (1);
   - first and second photodetector means (7, 16) respectively associated with the first and second light sources;
   - processing means, connected to the first and second detector means, for evaluating longitudinal and transverse components of the velocity of the object; and
   - first and second optical means (6, 14, 15) for focusing the first and second light rays back-scattered by the object onto the respective first and second detector means,

   characterized in that:

   - the first light source projects a point of light (4) onto the object, and the second light source projects a line of light (12) onto the said object;
   - the second optical means are capable of filtering the light rays as a function of their angle of incidence;
   - the first detector means include one detector, and the second detector means include a linear array of detectors in which each of the said detectors can detect a segment of the back-scattered line of light, this line being focused and filtered by the second optical means; and
   - the processing means are capable of determining

     · time cross-correlation functions between the detector of the first detector means and each of the detectors of the second detector means;
     · cross-correlation coefficients of these cross-correlation functions;
     · a value of the position, in the linear array of detectors, of the detector associated with the cross-correlation coefficient with maximum value;
     · a value of the abscissa of the maximum in the cross-correlation function corresponding to the coefficient with maximum value;
     · the transverse component of the velocity of the object, on the basis of the value of the position of the detector in the linear array and the value of the distance between the point of light and the line of light on the object; and

   - the longitudinal component of the velocity of the object, on the basis of the abscissa value determined and the value of the distance between the point of light and the line of light on the object.

2. Device according to Claim 1, characterized in that the second optical means include a cylindrical lens (14), parallel to the reference plane, for focusing the line of light back-scattered by the object and received in a direction substantially perpendicular to the said plane.

3. Device according to Claim 2, characterized in that the second optical means include, between the cylindrical lens and the linear array of detectors, screening means (15) for absorbing the light rays originating from the line of light and having an angle of incidence greater than a reference angle of incidence.

**4.** Device according to Claim 1, characterized in that the second optical means include a plurality of partial or full spherical lenses, each of these spherical lenses being associated with one detector in the linear array of detectors and being arranged parallel to the reference plane in order to focus a segment of the line of light back-scattered by the object.

**5.** Device according to Claim 4, characterized in that the partial or full spherical lenses are holographic.

**6.** Device according to Claim 4 or 5, characterized in that the second optical means include, between the plurality of spherical lenses and the linear array of detectors, screening means for absorbing the light rays originating from the line of light and having an angle of incidence greater than a reference angle of incidence.

**7.** Device according to any one of Claims 3 to 6, characterized in that the screening means include a plurality of optically transparent plates (15a, 15c) which are parallel to one another and are arranged perpendicularly to the plane.

**8.** Device according to Claim 7, characterized in that the transparent plates are glass plates.

**9.** Device according to Claim 8, characterized in that, on at least one of its faces, the glass plates have a layer of an opaque material (15b, 15d) capable of forming a screen against light.

**10.** Device according to Claim 7, characterized in that the transparent plates are air plates produced by opaque sheets forming a screen against light, arranged perpendicularly to the plane and separated by air.

**11.** Device according to any one of Claims 3 to 6, characterized in that the screening means include a holographic optical element capable of filtering the light rays originating from the line of light and received in a reduced angular pass-band relative to the plane perpendicular to the reference plane.

**12.** Device according to any one of Claims 1 to 11, characterized in that the light sources are laser sources.

FIG. 1

FIG. 2